# FASCICULE DE BREVET EUROPEEN

(11) **EP 2 133 927 B1**
(45) Date de publication et mention de la délivrance du brevet: **23.11.2011**
(21) Numéro de dépôt: 08158188.6
(22) Date de dépôt: 13.06.2008
(51) Int. Cl.: H01L 31/18

(54) **Procédé de fabrication d'une membrane bitumineuse**
Verfahren zur Herstellung einer Bitumenmembran
Method for manufacturing a bituminous membrane

(43) Date de publication de la demande: 16.12.2009
(73) Titulaire: S.A. Imperbel N.V., 1651 Lot (BE)
(72) Inventeur: Richir, Amélie, 1360, Perwez (BE); Getlichermann, Michel, 1360, Perwez (BE); Bertrand, Eric, 1360, Perwez (BE)
(74) Mandataire: Quintelier, Claude

(56) Documents cités:
- EP-A- 1 104 818
- WO-A-97/24485
- WO-A-2007/055963
- CA-C- 1 289 618
- US-A1- 2001 054 262
- US-A1- 2005 178 429

## Description

La présente invention concerne un procédé de fabrication d'une membrane bitumineuse pourvue de cellules photovoltaïques.

Un tel procédé est connu de la demande internationale WO 2007/055963. Dans le procédé connu, les cellules photovoltaïques sont appliquées sur la membrane après la fabrication de cette dernière. Comme la membrane bitumineuse est posée sur une toiture en tant qu'élément d'étanchéité, la présence de cellules photovoltaïques permet ainsi d'avoir sur la toiture des cellules photovoltaïques qui peuvent capter la lumière du soleil et ainsi convertir l'énergie solaire en énergie électrique qui peut alors être utilisée par les occupants de l'immeuble sur la toiture duquel la membrane est posée. Il faut remarquer qu'il existe aussi des membranes synthétiques qui intègrent des cellules photovoltaïques à leur surface, mais elles ne comportent pas de bitume.

Un inconvénient du procédé connu est que les cellules photovoltaïques doivent être appliquées après la pose de la membrane, ce qui entraîne un coût de placement supérieur. De plus, les cellules doivent être appliquées avec soin, sinon le risque qu'elles se détachent au fil du temps est trop élevé.

L'invention a pour but de réaliser un procédé de fabrication d'une membrane bitumineuse pourvue de cellules photovoltaïques où un produit fini avec une garantie de performances d'adhésion, d'étanchéité et de rendement électrique dans le temps.

A cette fin, un procédé suivant l'invention est caractérisé en que l'on applique sur une face d'une armature pourvue en surface d'une couche antiexsudation lesdites cellules photovoltaïques et en ce que l'on applique ensuite une masse bitumineuse sur l'autre face de ladite armature. En appliquant les cellules photovoltaïques sur une face d'une armature pourvue d'une couche antiexsudation, on obtient une armature porteuse des cellules photovoltaïques qui peut, en tant que telle, être utilisée pour appliquer le bitume sur l'autre face que celle où la couche antiexsudation est appliquée. Le bitume ne vient ainsi pas en contact direct avec les cellules lors d'une fabrication machinale de la membrane. De plus, comme les cellules sont appliquées sur la face où se trouve la couche antiexsudation, les cellules ne pourront pas facilement se détacher dû à une migration d'huile. En effet, la couche antiexsudation limite considérablement la migration d'huile dans le bitume. Comme l'huile ne peut traverser la couche antiexsudation, elle ne peut délaminer les cellules.

Une première forme de réalisation préférentielle d'un procédé suivant l'invention est caractérisée en ce que les cellules photovoltaïques sont collées sur ladite armature. L'usage de colle permet une application rapide et machinale des cellules sur l'armature.

Une deuxième forme de réalisation préférentielle d'un procédé suivant l'invention est caractérisée en ce que l'on applique d'abord une première couche de colle sur ladite armature avant d'y appliquer les cellules photovoltaïques, lesquelles sont ensuite recouvertes d'une deuxième couche de colle et d'une couche de protection. Les cellules se trouvent ainsi en sandwich entre deux couches de colle et une couche de protection. Ceci permet non seulement une bonne adhérence des cellules à l'armature, mais également une protection des cellules photovoltaïques.

Une troisième forme de réalisation préférentielle d'un procédé suivant l'invention est caractérisée en ce que pour la première et la deuxième couche de colle, on utilise un film d'éthylène vinylacétate. Un tel film possède une bonne résistance à la chaleur, ce qui est avantageux lors de l'application du bitume.

Une quatrième forme de réalisation préférentielle d'un procédé suivant l'invention est caractérisée en ce que les cellules photovoltaïques sont appliquées sous forme de films. Ceci permet une adhésion complète des cellules sur l'armature.

Une cinquième forme de réalisation préférentielle d'un procédé suivant l'invention est caractérisée en ce que les cellules photovoltaïques sont appliquées par lamination sur l'armature. Ceci permet de bien faire adhérer les cellules à l'armature.

L'invention sera maintenant décrite plus en détail à l'aide des dessins qui illustrent une forme préférentielle du procédé suivant l'invention, ainsi que d'une membrane.

Dans les dessins :
la Fig. 1 illustre une forme préférentielle du procédé pour appliquer les cellules photovoltaïques sur une armature;
la Fig. 2 illustre un exemple montrant comment la masse bitumineuse est appliquée sur l'armature, et
la Fig. 3 illustre une découpe transversale à travers une membrane obtenue par application du procédé suivant l'invention.

Dans les dessins une même référence a été attribuée à un même élément ou à un élément analogue.

Dans le procédé suivant l'invention, on prend une armature 2 enroulée sur une première bobine 1. Cette armature peut être formée par un non-tissé en polyester, le cas échéant, renforcé par des fibres de verre ou du polyester. L'armature peut également être formée par un voile de verre. Mais il va de soi que des armatures d'autres compositions peuvent être utilisées. L'armature doit bien entendu être apte à former un support pour la masse bitumineuse d'une membrane bitumineuse.

Une face 2a de l'armature est pourvue en surface d'une couche antiexsudation. Cette couche empêche la migration d'huile, présente dans la masse bitumineuse, vers la surface de la membrane. Les propriétés et la fabrication d'une telle couche antiexsudation sont, par exemple, décrites dans le brevet EP 0 876 532. Cette couche anti-exsudation peut aussi être réalisée à l'aide d'autres polymères que ceux décrit dans le document cité.

L'armature 2 pourvue de la couche antiexsudation est déroulée de la première bobine et est dirigée vers un premier rouleau 5 où est également amené un premier film 4 de colle déroulé à partir d'une deuxième bobine 3. Le premier film est, de préférence, un film d'éthylène vinylacétate (EVA). A l'aide du premier rouleau 5, le premier film 4 est appliqué contre l'armature 2. Cette dernière pourvue du premier film passe ensuite vers une station 6 où des cellules photovoltaïques 7 sous forme de plaques sont posées sur l'armature. A partir d'une troisième bobine 8, on déroule un deuxième film 10, également de préférence un film EVA, qui est appliqué à l'aide d'un deuxième rouleau 9 sur l'armature pourvue des cellules photovoltaïques. Ainsi, les cellules sont en sandwich entre le premier et le deuxième film de colle. Enfin, à partir d'une quatrième bobine 12, on déroule un film 13 de polytétrafluoroéthylène (PTFE) qui est appliqué à l'aide d'un troisième rouleau 11 sur le deuxième film 10. Le film 13 protège ainsi les cellules présentes entre les films 10 et 13.

L'ensemble armature, cellules et films passe ensuite dans le dispositif de lamination 16 où à l'aide de presses 14 et 15, l'ensemble est pressé pour former un ensemble cohérent, formant l'armature 17 pourvue de la couche antiexsudation. Le laminage se fait, de préférence, dans une plage de température située entre 120°C et 180°C, de préférence à 150°C, température de fusion des films. Le laminage se fait, de préférence, sous vide et durant une période située entre 10 et 20 minutes. Ainsi une structure intègre et cohérente est obtenue.

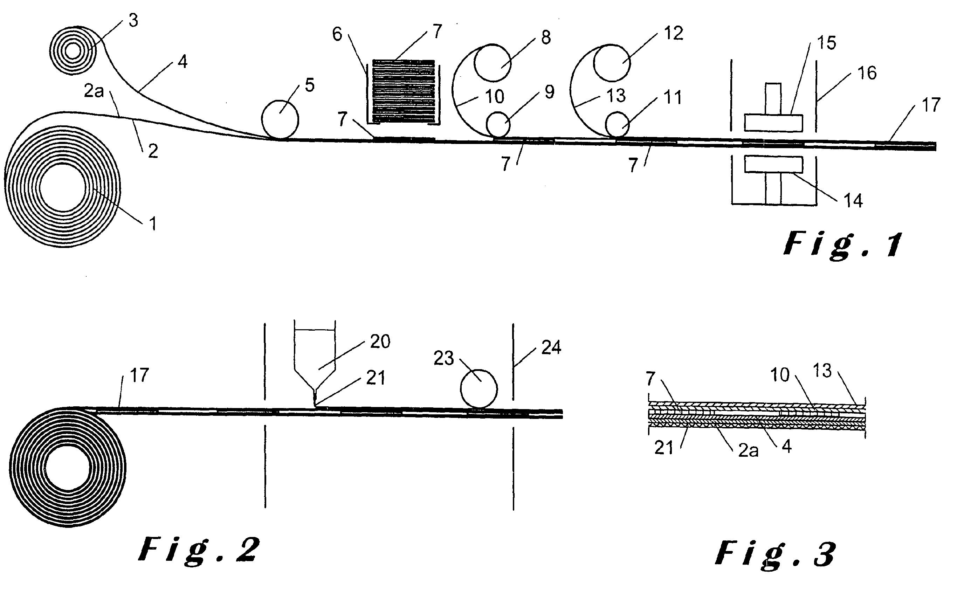

Il va de soi que d'autres formes de réalisation que celles qui viennent d'être décrites à l'appui de la Fig. 1 peuvent être envisagées. Ainsi, il est également possible d'apporter les cellules photovoltaïques sous forme de films, permettant ainsi un procédé de fabrication en continu. Il est également possible d'utiliser d'autres types d'adhésifs présentant une bonne tenue à des températures au-delà de 120°C pour le collage des cellules photovoltaïque sur l'armature pourvue de la couche antiexsudation.

Il est également envisageable d'appliquer la colle par pulvérisation.

La Fig. 2 illustre l'application d'une masse bitumineuse sur l'armature 17 pourvue de la couche antiexsudation. L'armature, avec les cellules photovoltaïques tournées vers le bas, passe dans une station 24 pourvue d'un système d'apport 20 de la masse bitumineuse 21. Dans la station 24, la masse bitumineuse 21 est déversée sur l'autre face de l'armature que celle où sont appliquées la couche antiexsudation et les cellules photovoltaïques. Bien entendu l'armature avec les cellules photovoltaïques peut également être tournée vers le haut.

Après application de la masse bitumineuse 21, l'ensemble passe sous un rouleau 23 qui égalise et refroidit la masse bitumineuse. L'application, même à une température minimale de 180°C de la masse bitumineuse, n'affecte ni la couche antiexsudation, ni les films EVA et PTFE qui résistent à cette température. En effet, l'effet barrière de la couche anti-exsudante permet au complexe armature et cellules photovoltaïques de résister à l'application d'une masse bitumineuse à des températures supérieures au point de fusion de la colle EVA. Le résultat est une non altération de l'adhésion et du rendement électrique du panneau photovoltaïque.

La membrane bitumineuse lorsqu'elle sera appliquée sur toiture pourra ainsi, grâce à la présence des cellules photovoltaïques, servir de source d'énergie en captant l'énergie solaire. Puisque les cellules photovoltaïques se trouvent de l'autre côté de l'armature que celui où la masse bitumineuse est appliquée, et que l'armature est pourvue d'une couche antiexsudation, une éventuelle migration d'huile ne pourra pas décoller les cellules photovoltaïques. Puisque la membrane avec ses cellules photovoltaïques forment un ensemble, elle peut être déroulée en tant que telle sur toiture, ce qui facilite considérablement la pose.

## Revendications

1. Procédé de fabrication d'une membrane bitumineuse pourvue de cellules photovoltaïques, **caractérisé en que** l'on applique sur une face d'une armature pourvue en surface d'une couche anti-exsudation lesdites cellules photovoltaïques et en ce que l'on applique ensuite une masse bitumineuse sur l'autre face de ladite armature.

2. Procédé de fabrication suivant la revendication 1, **caractérisé en ce que** les cellules photovoltaïques sont collées sur ladite armature.

3. Procédé de fabrication suivant la revendication 2, **caractérisé en ce que** l'on applique d'abord une première couche de colle sur ladite armature avant d'y appliquer les cellules photovoltaïques, lesquelles sont ensuite recouvertes d'une deuxième couche de colle et d'une couche de protection.

4. Procédé de fabrication suivant la revendication 3, **caractérisé en ce que** pour la première et la deuxième couche de colle, on utilise un film d'éthylène vinylacétate.

5. Procédé de fabrication suivant la revendication 3 ou 4, **caractérisé en ce que** pour la couche de protection, on utilise un film de polytétrafluoroéthylène.

6. Procédé de fabrication suivant l'une des revendications 1 à 5, **caractérisé en ce que** les cellules photovoltaïques sont appliquées sous forme de films.

7. Procédé de fabrication suivant l'une des revendications 1 à 6, **caractérisé en ce que** les cellules photovoltaïques sont appliquées par lamination sur l'armature.

8. Procédé de fabrication suivant la revendication 7, **caractérisé en ce que** la lamination est réalisée à une température située entre 120°C et 180°C et durant une période de temps située entre 10 et 20 minutes.

9. Procédé de fabrication suivant la revendication 7 ou 8, **caractérisé en ce que** la lamination est réalisée sous vide.

## Claims

1. Method of manufacturing a bituminous membrane provided with photovoltaic cells, **characterized in that** the said photovoltaic cells are applied to one face of a reinforcement provided on the surface with an anti-exudation layer and **in that** next a bituminous mass is applied to the other face of said reinforcement.

2. Manufacturing method according to claim 1, **characterized in that** the photovoltaic cells are adhesively bonded to said reinforcement.

3. Manufacturing method according to claim 2, **characterized in that** first of all a first layer of adhesive is applied to said reinforcement before applying the photovoltaic cells thereto, which are then covered with a second layer of adhesive and a protective layer.

4. Manufacturing method according to claim 3, **characterized in that**, for the first and second layers of adhesive, a film of ethylene vinyl acetate is used.

5. Manufacturing method according to claim 3 or 4, **characterized in that**, for the protective layer, a polytetrafluoroethylene film is used.

6. Manufacturing method according to one of claims 1 to 5, **characterized in that** the photovoltaic cells are applied in the form of films.

7. Manufacturing method according to one of claims 1 to 6, **characterized in that** the photovoltaic cells are applied by lamination on the reinforcement.

8. Manufacturing method according to claim 7, **characterized in that** the lamination is carried out at a temperature of between 120°C and 180°C and for a period of time of between 10 and 20 minutes.

9. Manufacturing method according to claim 7 or 8, **characterized in that** the lamination is carried out under vacuum.

## Patentansprüche

1. Verfahren zur Herstellung einer Bitumenmembran, die mit photovoltaischen Zellen versehen ist, **dadurch gekennzeichnet, dass** die photovoltaischen Zellen auf eine Seite eines Träger aufgebracht werden, der oberflächlich mit einer Schutzschicht gegen Ausschwitzen versehen ist, und dass anschließend eine Bitumenmasse auf die andere Seite des Trägers aufgebracht wird.

2. Herstellungsverfahren nach Anspruch 1, **dadurch gekennzeichnet, dass** die photovoltaischen Zellen auf den Träger geklebt werden.

3. Herstellungsverfahren nach Anspruch 2, **dadurch gekennzeichnet, dass** zunächst eine erste Klebstoffschicht auf den Träger aufgebracht wird, um anschließend die photovoltaischen Zellen dort aufzubringen, welche daraufhin mit einer zweiten Klebstoffschicht und mit einer Schutzschicht bedeckt werden.

4. Herstellungsverfahren nach Anspruch 3, **dadurch gekennzeichnet, dass** für die erste und die zweite Klebstoffschicht eine Ethylenvinylacetat-Dünnschicht verwendet wird.

5. Herstellungsverfahren nach Anspruch 3 oder 4, **dadurch gekennzeichnet, dass** für die Schutzschicht eine Pofytetrafluorethylen-Dünnschicht verwendet wird.

6. Herstellungsverfahren nach einem der Ansprüche 1 bis 5, **dadurch gekennzeichnet, dass** die photovoltaischen Zellen in Form von Dünnschichten aufgebracht werden.

7. Herstellungsverfahren nach einem der Ansprüche 1 bis 6, **dadurch gekennzeichnet, dass** die photovoltaischen Zellen durch Lamination auf den Träger aufgebracht werden.

8. Herstellungsverfahren nach Anspruch 7, **dadurch gekennzeichnet, dass** die Lamination bei einer Temperatur, die zwischen 120° C und 180° C liegt, und über einen Zeitraum, der zwischen 10 und 20 Minuten beträgt, durchgeführt wird.

9. Herstellungsverfahren nach Anspruch 7 oder 8, **dadurch gekennzeichnet, dass** die Lamination unter Vakuum durchgeführt wird.
